# EUROPÄISCHE PATENTSCHRIFT

(11) **EP 2 858 189 B1**
(45) Veröffentlichungstag und Bekanntmachung des Hinweises auf die Patenterteilung: **25.05.2016**
(21) Anmeldenummer: 13187515.5
(22) Anmeldetag: 07.10.2013
(51) Int. Cl.: H02G 3/04

(54) **Trennvorrichtung für Kabelbahnen und Kabelbahn**
Separating device for cable runs and cable run
Elément de séparation pour chemins de câbles et chemin de câbles

(43) Veröffentlichungstag der Anmeldung: 08.04.2015
(73) Patentinhaber: Zurecon AG, 9053 Teufen AR (CH)
(72) Erfinder: Pfluger, Gerd, 4625 Oberbuchsiten (CH)
(74) Vertreter: Rutz & Partner

(56) Entgegenhaltungen:
- FR-A1- 2 749 912
- US-A1- 2009 260 846

## Beschreibung

Die Erfindung betrifft eine Trennvorrichtung, insbesondere eine Ordnungstrennvorrichtung, für Kabelbahnen und eine Kabelbahn mit wenigstens einer solchen Trennvorrichtung.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in metallene Kabelbahnen gelegt und so beispielsweise von einem Schaltfeld oder einer Zentrale zu den Verbrauchern geführt. Kabelbahnen dieser Art, die aus einzelnen Abschnitten zusammengesetzt werden, sind beispielsweise aus [1], Produktkatalog der LANZ OENSINGEN AG, Juni 2009, oder FR 2 749 912 bekannt.

Derartige Kabelbahnen umfassen zwei aus Blech gefertigte Seitenwände, die durch einen Kabelbahnboden miteinander verbunden sind. Der Kabelbahnboden besteht üblicherweise aus einem Metallblech, das vorzugsweise einstückig mit den Seitenwänden verbunden und mit Längslochungen versehen ist.

In der Regel werden in ein- und dieselbe Kabelbahn verschiedenartige Kabel und Leitungen, wie Leitungen des Normalnetzes, Leitungen der unterbruchsfreien Stromversorgung, Leitungen von Daten- und Kommunikationsnetzen oder Steuersystemen, parallel verlegt. Falls Starkstrom- und Schwachstromkabel ungeordnet oder kreuzweise in den Kabelbahnen zu liegen kommen, können Störungen in den zugehörigen Kommunikations- oder Datennetzen auftreten. Ferner sind Nachinstallationen, bei ungeordneter Verlegung der Kabel, nur mit entsprechendem Aufwand möglich.

Für die Ortstrennung der Kabel werden daher Trennvorrichtungen bzw. Ordnungstrennvorrichtungen, beispielsweise die in [1], Seiten 44-46, gezeigten Ordnungstrennbolzen und Ordnungstrennprofile eingesetzt. Ordnungstrennbolzen werden in die Längslochungen eingeschraubt. Ordnungstrennprofile werden mittels Schrauben am Boden der Kabelbahn befestigt. Die bekannten Ordnungstrennvorrichtungen verursachen daher einen erheblichen Installationsaufwand und erfordern zusätzliches Installationsmaterial. Zu beachten ist zudem, dass die Position der Ordnungstrennvorrichtungen oft geändert werden muss, beispielsweise falls neue Kabel eingelegt werden.

Der vorliegenden Erfindung liegt daher die Aufgabe zugrunde, eine verbesserte Trennvorrichtung für Kabelbahnen zu schaffen, die ein Bodenteil mit Längslochungen aufweisen.

Insbesondere ist eine Trennvorrichtung zu schaffen, die mit geringem Aufwand gefertigt werden kann. Die Trennvorrichtung soll zudem rasch installiert und deinstalliert werden können, um Konfigurationsänderungen vorzunehmen.

Die erfindungsgemässe Trennvorrichtung soll ferner nur wenig Raum in Anspruch nehmen und auch an der Unterseite der Kabelbahn nicht störend in Erscheinung treten. Insbesondere soll die Trennvorrichtung keine Hindernisse bilden, die einen Installateur verletzen könnten.

Das installierte Kabel soll von den Trennvorrichtungen schonend gehalten werden, so dass beim Einlegen oder Nachziehen der Kabel keine Beschädigungen auftreten.

Anhand der erfindungsgemässen Trennvorrichtungen sollen Kabelbahnen vorteilhaft strukturiert und vorteilhaft genutzt werden können.

Diese Aufgabe wird mit einer Trennvorrichtung gemäss Anspruch 1 und einer Kabelbahn mit wenigstens einer solchen Trennvorrichtung gemäss Anspruch 13 gelöst. Vorteilhafte Ausgestaltungen der Erfindung sind in weiteren Ansprüchen angegeben.

Die Trennvorrichtung, die für die Verwendung in Kabelbahnen vorgesehen ist, die eine mit Längslochungen versehene Bodenplatte aufweisen, umfasst eine Ankervorrichtung, die in eine der Längslochungen der Bodenplatte einsetzbar ist.

Erfindungsgemäss umfasst die Ankervorrichtung zwei zumindest annähernd L-förmige Ankerteile, die je eine in eine der Längslochungen einführbare Fussplatte und eine nicht in die Längslochungen einführbare Kopfplatte aufweisen. Ferner ist eine mit einer Schlitzöffnung versehene Abdeckung vorgesehen, mittels der die beiden aneinander liegenden Kopfplatten gehalten werden, nachdem die voneinander abgewandten Fussplatten durch die Längslochungen hindurch geführt und die Kopfplatten gegeneinander gedreht wurden.

Nach der Montage der Ankervorrichtung liegen die Kopfplatten Rücken an Rücken aneinander an. Die Fussplatten, die in entgegengesetzte Richtungen weisen und gemeinsam eine Ankerplatte bilden, liegen zumindest annähernd in einer Ebene und drücken vorzugsweise elastisch gegen die Unterseite Bodenplatte der Kabelbahn an, so dass die Kopfplatten gegen die Oberseite der Bodenplatte gezogen werden.

Vorzugsweise sind die Ankerteile federelastisch ausgestaltet. Beispielsweise sind die Ankerteile aus federelastischem Metall oder Kunststoff gefertigt.

Die Kopfplatten sind gegenüber der zugehörigen Fussplatte vorzugsweise in einem Winkel geneigt, der in einem Bereich von 75° bis 90°, vorzugsweise in einem Bereich von 80° bis 85° liegt. Bei einer Ausrichtung der Kopfplatten senkrecht zur Bodenplatte der Kabelbahn und parallel zur Bodenplatte ausgerichteten Fussplatten werden die Ankerteile daher in der Art eines Federelements vorgespannt.

Die Ankervorrichtung kann in einfacher Weise in einer der Längslochungen verankert werden, indem die Fussplatten der beiden Ankerteile in die Längslochungen eingeführt werden, bis die Kopfplatten an der Bodenplatte anliegen. Dazu werden die Fussplatten vorzugsweise derart gegeneinander geführt, dass die Kopfplatten in entgegengesetzte Richtungen weisen. Nach dem Einführen der Fussplatten werden die Kopfplatten je um 90° gegeneinander gedreht, bis sie Rücken an Rücken aneinander liegen. Nun wird die vorzugsweise oben geschlossene Abdeckung auf die beiden Kopfplatten aufgesetzt bzw. werden die beiden Kopfplatten in die Schlitzöffnung der Abdeckung eingeführt. Grundsätzlich ist es auch möglich die Abdeckung ringförmig zu gestalten.

Die Abdeckung wird in der Folge kraftschlüssig oder formschlüssig durch vorzugsweise vorgesehene Ankerteile oder durch ein zusätzliches Arretierelement gehalten, welches von aussen durch die Abdeckung und die Ankervorrichtung hindurch geführt wird. Alternativ weist jede der Kopfplatten ein Arretierelement auf, welches innerhalb der Schlitzöffnung in der Abdeckung einrastbar oder verankerbar ist. Dazu weist die Abdeckung innerhalb der Schlitzöffnung vorzugsweise eine Einformung auf, die der formschlüssigen Aufnahme oder dem kraftschlüssigen Halten des Arretierelements dient. Besonders vorteilhaft kann eine runde Ausformung in den Kopfplatten vorgesehen werden, welche in die Ausnehmung in der Abdeckung eingreift und kraftschlüssig aber nicht formschlüssig gehalten wird. Das kraftschlüssige Halten erlaubt es, die Abdeckung leichter zu lösen und eine Positionsänderung der Trennvorrichtung vorzunehmen.

Beim Einlegen oder Verschieben der Kabel kann die Abdeckung somit nicht oder nur mit grösserer Krafteinwirkung von der Ankervorrichtung getrennt werden. Ein selbsttätiges Lösen ist hingegen ausgeschlossen.

Die erfindungsgemässe Trennvorrichtung kann einfach von oben, das heisst der montagefreundlicheren Seite der Kabelbahn montiert werden. Die Ankerteile werden von oben durch eine der Längslochungen in der Bodenplatte eingesetzt, gegeneinander gedreht und mittels der Abdeckung fixiert.

Die vorzugsweise aus Kunststoff bestehende und zumindest innerhalb der Kabelbahn kantenfreie Abdeckung hat vorteilhafterweise eine Doppelfunktion. Einerseits werden die Ankerteile der Ankervorrichtung fixiert. Andererseits wird in die Kabelbahn eingeführtes Kabel schonend behandelt. Jedes Kabel kann entlang der Abdeckung gezogen werden, ohne dass dieses beschädigt wird.

Weiterhin ist die Trennvorrichtung, ohne die Verwendung von Schrauben oder weiteren Montagemitteln, zuverlässig in der Bodenplatte verankert. Die relativ breiten Fussplatten bilden eine breite Ankerplatte oder Flanschplatte unterhalb der Bodenplatte, die auch unter starker Krafteinwirkung unlösbar gehalten ist.

Aufgrund der breiten Ankerplatte oder Flanschplatte bleibt die Ankervorrichtung zudem senkrecht ausgerichtet. Die Kopfplatten hingegen weisen wenigstens ein Stützelement auf bzw. bilden bei entsprechender Ausgestaltung selbst ein Stützelement, welches angrenzend an die Längslochung stabil auf der Bodenplatte abgestützt ist und verhindert, dass die Ankervorrichtung weiter in die Längslochungen eindringen kann.

Die erfindungsgemässe Trennvorrichtung weist daher nur wenige einfach ausgestaltete Teile auf, die hingegen derart vorteilhaft zusammenwirken, dass die Trennvorrichtung rasch und stabil in die Kabelbahn integriert werden kann, um diese vorteilhaft weiterzubilden und zu strukturieren. Innerhalb der Kabelbahn können damit individuell Ordnungstrennstrukturen und "Leitplanken" geschaffen werden, welche die installierten Kabel ordnen, leiten und insbesondere in Kurvenbereichen schützen. Der Querschnitt der Kabelbahn kann dabei wahlweise in zwei oder mehrere Querschnittsegmente unterteilt werden. Entlang der Kabelbahn, insbesondere vor oder nach Verzweigungsstellen, können die Grössenverhältnisse der Querschnittsegmente wahlweise geändert werden. Die Trennvorrichtungen können praktisch punktuell vorgesehen werden oder können sich über längere Distanzen erstrecken. Dem Anwender der Kabelbahn steht somit ein preisgünstiges Mittel zur Verfügung, um die Kabelbahn zu individualisieren und um Kabel oder Leitungen aller Art vorteilhaft zu verlegen.

Die L-förmigen Ankerteile können aus einem vorzugsweise federelastischen Blech ausgeschnitten und gebogen werden. Vorzugsweise weisen die Kopfplatten und die Fussplatten rechteckige Querschnittsflächen auf.

Die Breite der Kopfplatten ist vorzugsweise grösser als die Breite der Fussplatten, deren Mittelachsen vorzugsweise koaxial zueinander ausgerichtet sind. In dieser Ausgestaltung weisen die Kopfplatten daher beidseits je eine Schulter auf, die die Längslochungen je einseitig überragen und auf der Bodenplatte ruhen. Die Breite der Fussplatten ist hingegen stets geringer als die Länge der Längslochungen.

Die Fussplatten und die Kopfplatten sind in vorzugsweisen Ausgestaltungen je durch einen Verbindungssteg miteinander verbunden, dessen Breite der Breite der Fussplatten oder einem Teil davon entspricht. Dieser Steg kann durch Einschnitte in die Fussplatte entlang dem Grenzbereich zwischen der Kopfplatte und der Fussplatte geschaffen werden. Nach der Verankerung der Vorrichtungsteile in einer Längslochung des Bodenteils ist der Steg innerhalb der Längslochung in einem Winkelbereich von vorzugsweise 10° bis 45° drehbar. Die Breite des Stegs ist beispielsweise um den Faktor 1-2 grösser als die Breite der Längslochung.

In dieser Ausgestaltung mit einem Steg bzw. vorzugsweise beidseitig vorgesehenen Einschnitten in der Fussplatte kann die Ankervorrichtung somit in einer Längslochung gedreht werden. Ankervorrichtungen können daher entsprechend dem gewünschten Verlauf einer "Leitplanke" ausgerichtet werden. Nachdem mehrere Ankervorrichtungen wunschgemäss positioniert und ausgerichtet wurden, werden diese vorzugsweise durch eine gemeinsame Abdeckung abgedeckt. Beispielsweise wird ein Kunststoffband vorgesehen, das einen durchgehenden Längsschlitz aufweist. In der Folge können Segmente von diesem Kunststoffband in passender Länge abgeschnitten und als Abdeckung auf die installierten Ankervorrichtungen aufgesetzt werden.

Die Trennvorrichtungen werden vorzugsweise in einer Weise bereitgestellt, die es dem Anwender erlaubt, diese ohne weitere Aufwendungen zu montieren. Dazu werden die beiden Ankerteile vorzugsweise mit den Fussplatten gegeneinander geführt und durch ein Verbindungselement, beispielsweise eine Klebstofffolie fixiert. Alternativ können die Fussplatten mit Kopplungselementen versehen werden, welche die Fussplatten lösbar aneinander halten. In beiden Varianten können die miteinander verbundenen Fussplatten in einfacher Weise in eine Längslochung eingesetzt und voneinander gelöst werden, um die Kopfplatten gegeneinander zu drehen.

In vorzugsweisen Ausgestaltungen sind die beiden Ankerteile identisch ausgestaltet. Auf diese Weise reduziert sich der Fertigungsaufwand entsprechend. In alternativen Ausgestaltungen werden die Kopfplatte und/oder die Fussplatte eines der Ankerteile hingegen gekürzt, um die Abmessungen der beiden durch das Verbindungselement miteinander verbundenen Ankerteile zu reduzieren. Die asymmetrische Ausgestaltung der Ankervorrichtung erlaubt es ferner, die Ankervorrichtung nahe an einer Seitenwand der Kabelbahn zu installieren.

Nachfolgend wird die Erfindung anhand von Zeichnungen näher erläutert. Dabei zeigt:
- Fig. 1: eine erfindungsgemässe Trennvorrichtung 10 bzw. Ordnungstrennvorrichtung, die eine zweiteilige Ankervorrichtung 1 und eine darauf aufgesetzte Abdeckung 2 aufweist, die mittels eines optionalen Arretierelements 3 fixierbar ist sowie die Bodenplatte 92 einer Kabelbahn 9 die Längslochungen der Länge L9 unter Breite B9 aufweist;
- Fig. 2a: die Ankervorrichtung 1 von Figur 1 mit zwei L-förmigen Ankerteilen 1A, 1B, die je eine mit einem Arretierelement 112 versehene Kopfplatte 11A, 11B und je eine Fussplatte 12A, 12B aufweisen;
- Fig. 2b: die Trennvorrichtung 10 von Figur 1 in einer Schnittdarstellung mit einem Schnitt entlang der in Figur 1 gezeigten Linie A-A;
- Fig. 2c: die Abdeckung 2 der Trennvorrichtung 10 von Figur 2b vereinzelt gezeigt;
- Fig. 3: ein Segment einer Kabelbahn 9, die eine gelochte Bodenplatte 92 mit Längslochungen 921 gemäss Figur 1b aufweist, mit zwei Ankervorrichtungen 1 und drei teilweise oder vollständig montierten Trennvorrichtungen 10A, 10B und 10C gemäss Figur 1;
- Fig. 4: das Kabelbahnsegment 9 von Figur 3 mit den drei Trennvorrichtungen 10A, 10B und 10C von unten;
- Fig. 5: das Kabelbahnsegment 9 von Figur 3 mit einem in einer Längslochungen 921 eingesetzten Ankerteil 1B von oben und in einer Detaildarstellung von unten;
- Fig. 6a: eine vorzugsweise ausgestaltete Ankervorrichtung 1 mit zwei Ankerteilen 1A, 1B, deren Kopfplatten 11A, 11B mit zueinander korrespondierenden Kopplungselementen 113, 114 versehen sind;
- Fig. 6b: die Ankervorrichtung 1 von Figur 6a mit den beiden Ankerteilen 1A, 1B, die mittels der Kopplungselemente 113, 114 miteinander gekoppelt sind;
- Fig. 7a: eine weitere vorzugsweise ausgestaltete Trennvorrichtung 10D mit einer Ankervorrichtung 1, die ein erstes Ankerteil 1A gemäss Figur 2a und ein anhand einer Klebstofffolie 4 damit verbundenes zweites Ankerteil 1B aufweist, dessen Kopfplatte 11B gekürzt wurde;
- Fig. 7b: die Trennvorrichtung 10D von Figur 7a mit der teilweise auf das erste Ankerteil 1A aufgesetzten Abdeckung 2;
- Fig. 8a: die Ankervorrichtung 1 von Figur 7a beim Einführen der Fussplatten 12A, 12B in eine Längslochung 921;
- Fig. 8b: die Ankervorrichtung 1 von Figur 8a mit den Kopfplatten 11A, 11B an der Bodenplatte 92 der Kabelbahn 9 anliegend;
- Fig. 8c: die Ankervorrichtung 1 von Figur 8a mit den gegeneinander gedrehten Kopfplatten 11A, 11B und der Abdeckung 2;
- Fig. 9: zwei Trennvorrichtungen 10K, die zwei Ankervorrichtungen 1 und eine gemeinsame Abdeckung 20 aufweisen;
- Fig. 10a: ein Winkelstück 90 einer Kabelbahn 9, in die drei Ankervorrichtungen 1 eingesetzt sind, die je durch eine gesonderte Abdeckung 2 gemäss Figur 4 oder die durch eine gemeinsame bandförmige Abdeckung 20B gemäss Figur 10b abdeckbar sind;
- Fig. 10b: das Winkelstück 90 mit den drei Ankervorrichtungen 1, die durch eine gemeinsame bandförmige Abdeckung 20B abgedeckt sind;
- Fig. 11: das Kabelbahnsegment von Figur 3 mit einer Ankervorrichtung 1R die drehbar in einer Längslochung 921 gehalten ist und mit einer bandförmigen Abdeckung 20B die S-förmig verläuft und mehrere Ankervorrichtungen 1, 1R abdeckt; und
- Fig. 11a: ein Ankerteil 1A der drehbaren Ankervorrichtung von Figur 11, das einen Steg 13 aufweist, welcher die Kopfplatte 11 mit der Fussplatte 12 verbindet.

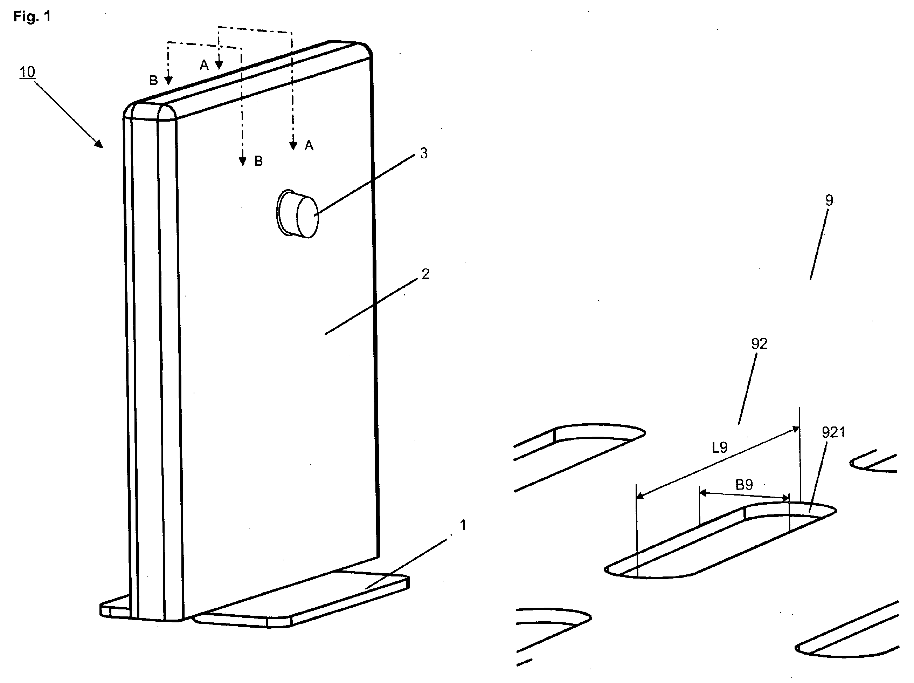

Figur 1 zeigt eine erfindungsgemässe Trennvorrichtung 10, die eine zweiteilige Ankervorrichtung 1 und eine darauf aufgesetzte Abdeckung 2 aufweist. Schematisch ist ein optionales Arretierelement 3 gezeigt, mittels dessen die Abdeckung 2 mit der Ankervorrichtung 1 verbindbar ist. Die Abdeckung 2 ist quaderförmig ausgebildet, abgerundet und in dieser vorzugsweisen Ausgestaltung frontseitig, rückseitig und oben abgeschlossen. Vorzugsweise wird eine Abdeckung 2 aus Kunststoff vorgesehen, welche gegebenenfalls über eine gewisse Elastizität verfügt. Mittels der stabil gehaltenen Abdeckung 2 kann auch schweres Kabel innerhalb einer Kabelbahn 9 von empfindlichem Kabel, beispielsweise Netzwerkleitungen, zuverlässig getrennt werden.

Figur 1 zeigt ferner die Bodenplatte 92 einer Kabelbahn 9, die abgerundete Längslochungen 921 der Länge L9 und der Breite B9 aufweist. Die erfindungsgemässe Trennvorrichtung 10 ist derart ausgestaltet, dass sie in einfacher Weise stabil in einer der Längslochungen 921 verankert werden kann, wie dies nachstehend beschrieben wird.

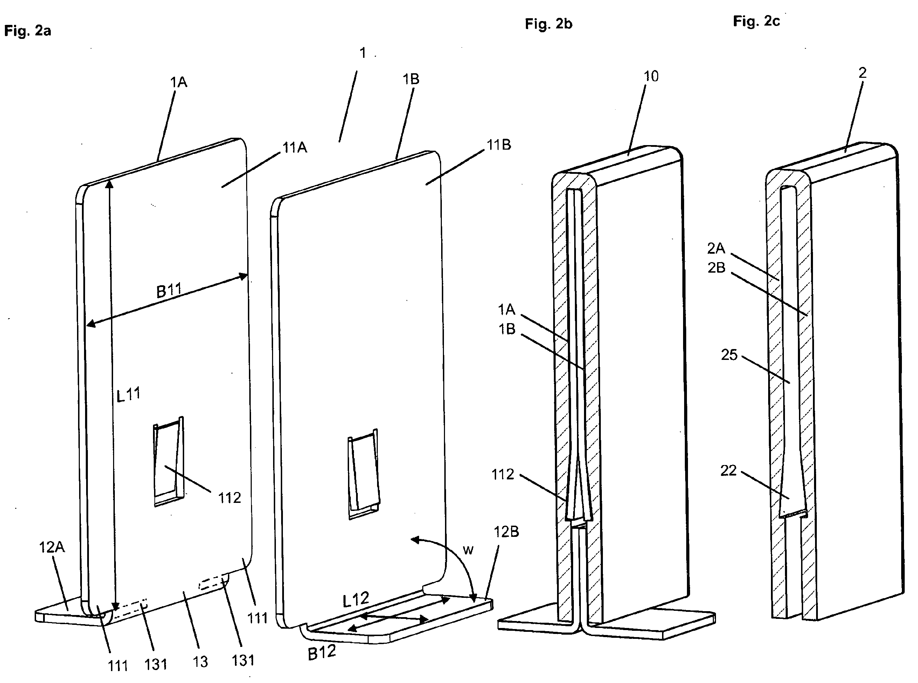

Figur 2a zeigt in einer vorzugsweisen Ausgestaltung die Ankervorrichtung 1 von Figur 1, die zwei identische Ankerteile 1A und 1B aufweist. Die Ankerteile 1A, 1B umfassen eine mit einem Arretierelement 112 versehene Kopfplatte 11A, 11B und je eine Fussplatte 12A, 12B. Jede der Kopfplatten 11A, 11B ist zumindest annähernd rechteckförmig ausgebildet und weist eine Länge L11 und eine Breite B11 auf. Die einstückig mit der Kopfplatte 11A, 11B verbundene Fussplatte 12A; 12B ist ebenfalls rechteckförmig ausgebildet und weist eine Länge L12 und eine Breite B12 auf.

Die Breite B11 der der Kopfplatten 11A, 11B ist grösser als die Breite der Fussplatten 12A, 12B , weshalb die Kopfplatten 11A, 11B die Fussplatten 12A, 12B beidseits überragen und eine Schulter 111 bilden. Währenddem die Fussplatten 12A, 12B durch die Längslochung 921 in die Bodenplatte 92 der Kabelbahn 9 eingeführt werden können, überragen die Kopfplatten 11A, 11B die Bodenplatte 92 beidseits der Längslochungen 921 mit der Schulter 111. Vorzugsweise ist die Breite B12 der Fussplatten 12A, 12B nur wenig geringer als die Länge L9 der Längslochungen 921, so dass gesichert ist, dass die Schulter 111 nicht in die Längslochung 121 hinein verschoben werden kann.

Figur 2a zeigt ferner, dass ein Arretierelement 112 aus den Kopfplatten 11A, 11B ausgeschnitten und nach aussen gebogen ist.

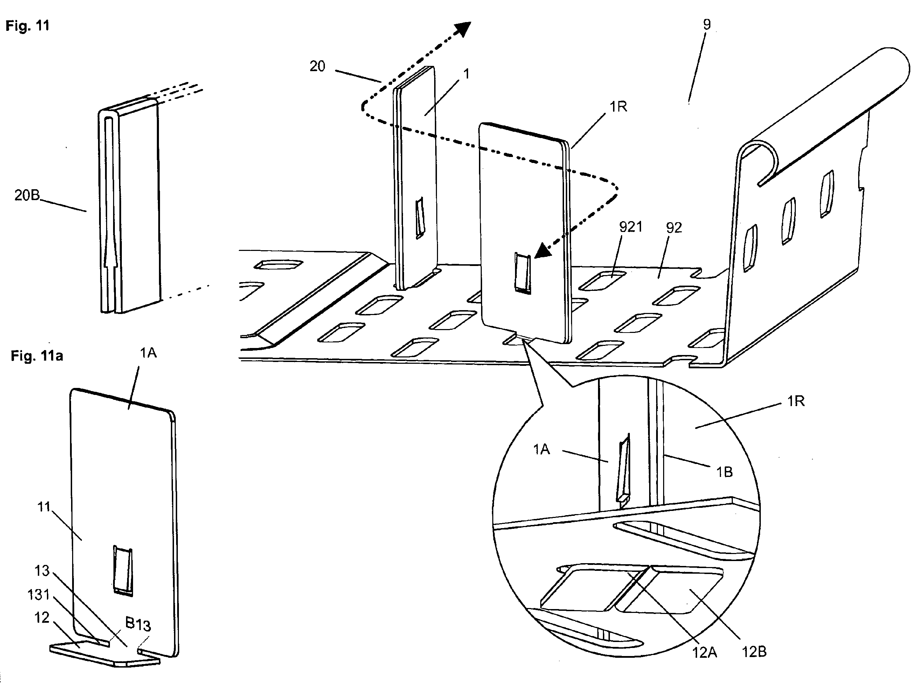

Weiterhin ist in Figur 2a eine vorteilhafte Ausgestaltungsmöglichkeit der Ankerteile 1A, 1B gezeigt. Das Ankerteil 1B weist zwischen der Kopfplatte 11A und der Fussplatte 12A einen Steg 13 auf, der durch zwei seitliche Einschnitte 131 verkürzt werden kann, falls die Ankervorrichtung 1 innerhalb einer Längslochung 921 in der Bodenplatte 92 der Kabelbahn 9 drehbar gelagert werden soll (siehe Figur 11).

Weiter ist in Figur 2a gezeigt, dass die Kopfplatten 11A, 11B und die Fussplatten 12A, 12B einen Winkel w einschliessen, der vorzugsweise etwas geringer ist als 90°. Auf diese Weise sind die in eine Längslochung 921 eingesetzten und gegeneinander gedrehten Ankerteile 1A, 1B stets unter mechanischer Spannung gehalten.

Figur 2b zeigt die Trennvorrichtung 10 von Figur 1 in einer Schnittdarstellung mit einem Schnitt entlang der in Figur 1 gezeigten Linie A-A.

Figur 2c zeigt die Abdeckung 2 der Trennvorrichtung 10 von Figur 2b vereinzelt. Es ist ersichtlich, dass die Abdeckung 2 zumindest im Querschnitt ein U-Profil mit zwei oben miteinander verbundenen Seitenwänden 2A, 2B aufweist, die eine Schlitzöffnung 25 begrenzen. Innerhalb der Schlitzöffnung 25 ist ferner in beiden Seitenwänden 2A, 2B je eine Ausnehmung 22 vorgesehen, die gegeneinander gerichtete Kanten aufweisen, in die die Arretierelemente 112 der Ankervorrichtung 1 einrasten können.

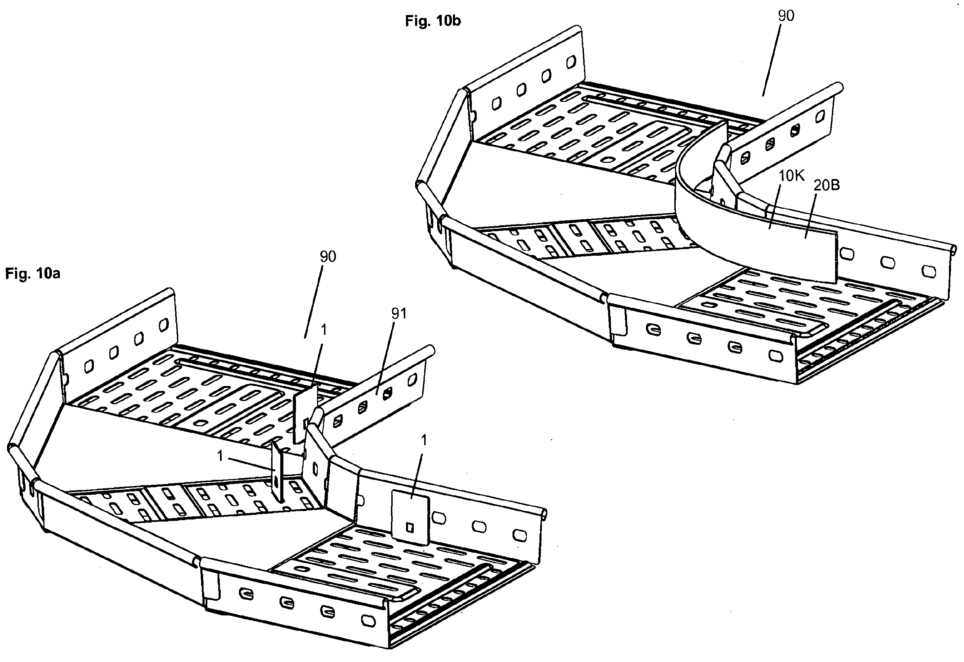

Die Seitenwände 2A, 2B der Abdeckung 2 können nicht nur oben, sondern auch frontseitig und rückseitig miteinander verbunden werden, so dass die Abdeckung 2 auf der Ankervorrichtung 1 unverschiebbar gehalten ist. In der beispielsweise in Figur 10B gezeigten Ausgestaltung ist die Abdeckung 20B bandförmig ausgestaltet. Beispielsweise wird das Band mit dem in Figur 2c gezeigten Querschnitt extrudiert und aufgerollt. Der Installateur kann daher Abschnitte von gewünschter Länge bedarfsweise vom Band abschneiden, um beispielsweise die in Figur 10b gezeigte Kurvenform oder Leitplanke zu realisieren.

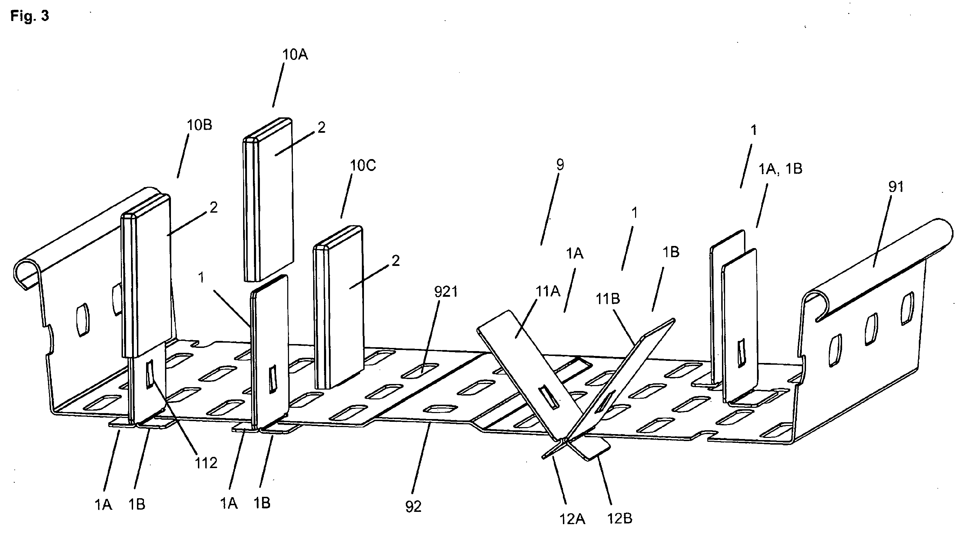

Figur 3 zeigt ein Segment einer Kabelbahn 9, die eine gelochte Bodenplatte 92 mit Längslochungen 921 gemäss Figur 1b aufweist. Anhand von zwei Ankervorrichtungen 1 und drei teilweise oder vollständig montierten Trennvorrichtungen 10A, 10B und 10C gemäss Figur 1 ist der Vorgang der Installation der Trennvorrichtungen 10A, 10B und 10C illustriert.

In einem ersten Schritt wird die Ankervorrichtung 1 mit den Ankerteilen 1A, 1B bereitgestellt. Die Ankerteile 1A, 1B werden in eine der Längslochungen 921 eingesetzt, indem die Ankerteile 1A, 1B auseinander geklappt werden, bis die vorzugsweise parallel ausgerichteten und aneinander anliegenden Fussplatten 12A, 12B in die Längslochung 921 eingeführt werden können. Anschliessend werden die von der Bodenplatte 92 gehaltenen Ankerteile 1A, 1B zurück gegeneinander geklappt, wie dies bei der Trennvorrichtung 10A gezeigt ist. In dieser Position kann die Abdeckung 2 auf die Ankervorrichtung 1 aufgesetzt werden, wodurch die beiden Kopfplatten 11A, 11B aneinander gehalten werden, wobei von den vorzugsweise federelastischen Fussplatten 12A, 12B gegebenenfalls eine Rückstellkraft auf diese einwirkt. Bei der Trennvorrichtung 10B ist die Abdeckung 2 bis zum Arretierelement 112 nach unten verschoben. Bei der Trennvorrichtung 10C ist die Abdeckung 2 über das Arretierelement 112 hinaus bis ganz nach unten verschoben worden, weshalb die Konfiguration von Figur 2b vorliegt. In dieser Konfiguration ist die Trennvorrichtung 10 stabil und hartelastisch mit der Bodenplatte 92 der Kabelbahn 9 verbunden und faktisch in diese integriert. Die Höhe der Trennvorrichtung 10C bzw. die Höhe der Abdeckung 2 entspricht etwa der Höhe der Seitenwände 91 der Kabelbahn 9, so dass der gesamte Querschnitt der Kabelbahn 9 wahlweise in verschiedene Segmente unterteilt werden kann.

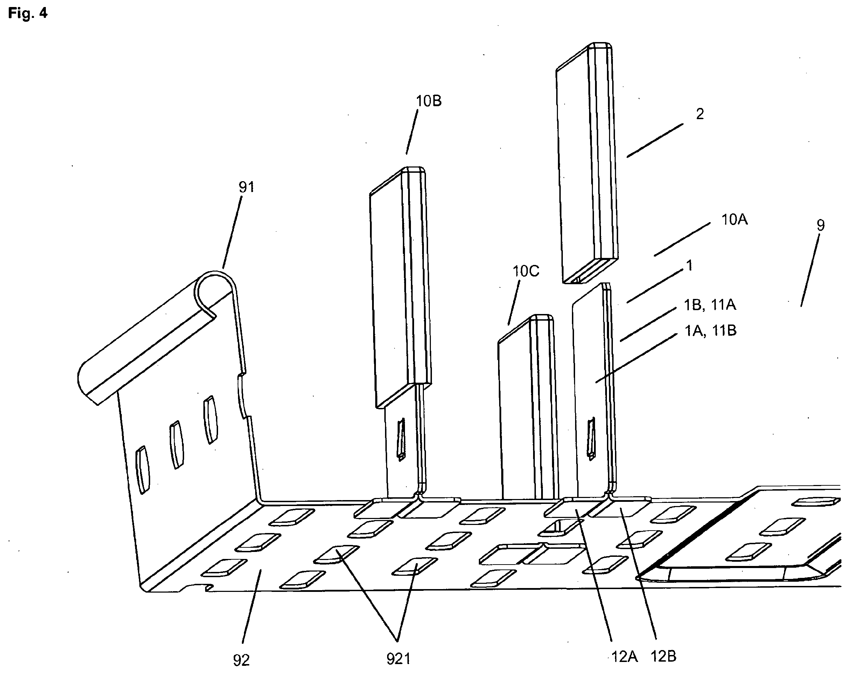

Figur 4 zeigt das Kabelbahnsegment 9 von Figur 3 mit den drei Trennvorrichtungen 10A, 10B und 10C von unten. Es ist ersichtlich, dass die Fussplatten 12A, 12B von unten am Kabelbahnboden 92 bündig anliegen. Dies zeigt einen weiteren Vorteil der erfindungsgemässen Trennvorrichtung 10, die nur wenig Raum in Anspruch nimmt und keine unerwünschten Hindernisse bildet. Die beiden Fussplatten 12A, 12B bilden eine solide Ankerplatte, welche die Ankervorrichtung 1 zuverlässig hält, aber nicht störend in Erscheinung tritt. Die Fussplatten 12A, 12B ragen nicht nach aussen, wie dies bei Schraubverbindungen typischerweise der Fall ist. Die Trennvorrichtungen 10 halten daher nicht nur das Kabel innerhalb der Kabelbahn 9 schonend, sondern bilden auch keine Verletzungsgefahr für den Installateur ausserhalb der Kabelbahn 9 und nehmen keinen zusätzlichen Raum in Anspruch.

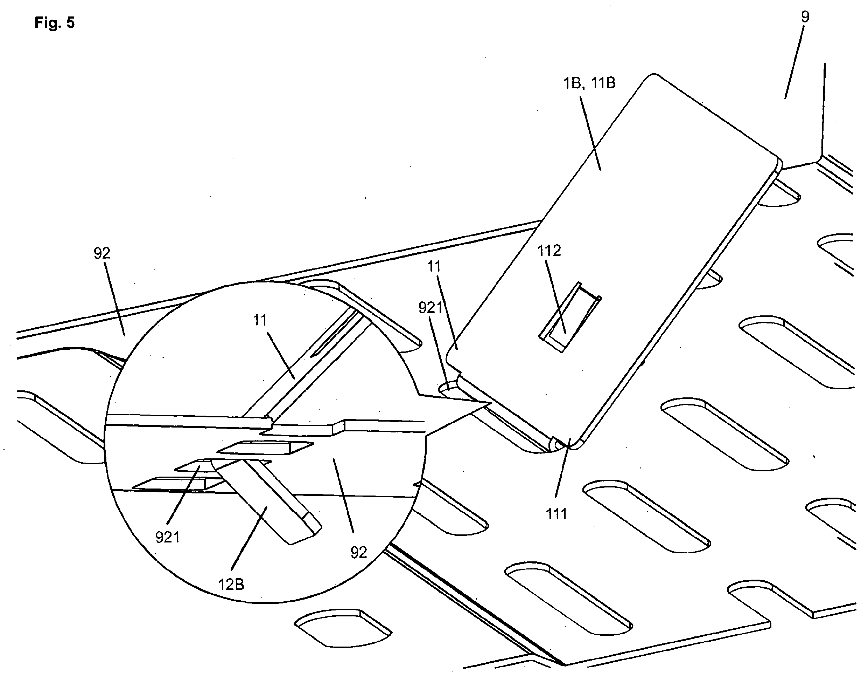

Figur 5 zeigt das Kabelbahnsegment 9 von Figur 3 mit einem in einer Längslochung 921 eingesetzten Ankerteil 1B von oben und in einer Detaildarstellung von unten. Es ist ersichtlich, dass die Fussplatte 12B des Ankerteils 1B in Richtung axial zur Kabelbahn 9 kaum verschiebbar ist, so dass die Schulterteile 111 der Kopfplatte 11B den an die Längslochung 921 angrenzenden Teil der Bodenplatte 92 stets überlappen. Das Ankerteil 1B kann daher gegen die Seitenwand 91 der Kabelbahn 9 gebracht werden, bis die Fussplatte 12B von unten auf die Bodenplatte 92 auftrifft, vorzugsweise bevor die Kopfplatte 11B bereits senkrecht zur Bodenplatte 92 ausgerichtet ist. Wird die Kopfplatte 11B nun weiter in die senkrechte Lage gebracht, so wird das Ankerteil 1B in der Art einer Feder gespannt. Nach dem Aufsetzen der Abdeckung 2 wird das gezeigte Arretierelement 112 daher in die zugehörige Ausnehmung 22 innerhalb der Abdeckung 2 angedrückt (siehe Figur 2c).

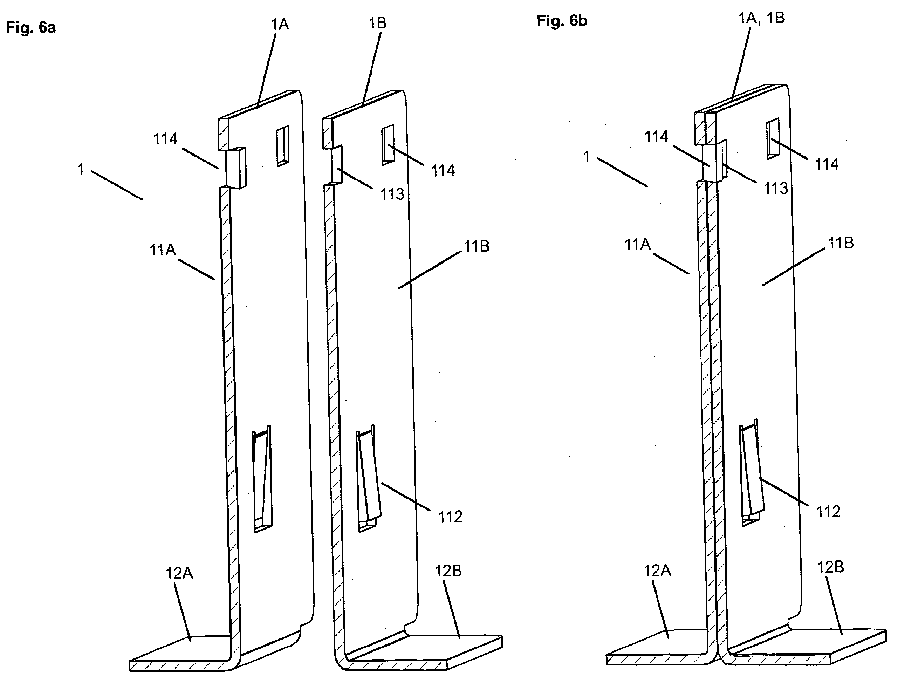

Figur 6a zeigt eine vorzugsweise ausgestaltete Ankervorrichtung 1 mit zwei Ankerteilen 1A, 1B, deren Kopfplatten 11A, 11B mit zueinander korrespondierenden Kopplungselementen 113, 114 versehen sind. Die Kopplungselemente 113, 114, beispielsweise Haken, Zungen oder Öffnungen, sind in die Kopfplatten 11A, 11B eingearbeitet und können ineinander verschoben werden.

Figur 6b zeigt die Ankervorrichtung 1 von Figur 6a mit den beiden Ankerteilen 1A, 1B, die mittels der Kopplungselemente 113, 114 miteinander gekoppelt sind. Bei der Installation können diese Ankerteile 1A, 1B zusammengeklappt und miteinander gekoppelt werden, ohne dass die Abdeckung 2 aufgesetzt wird. Auf diese Weise kann sich der Installateur zuerst auf die Ankerteile 1A, 1B konzentrieren und die Abdeckung 2 anschliessend aufsetzen. Dies ist insbesondere dann von Vorteil, wenn der Installateur "über Kopf" arbeiten muss.

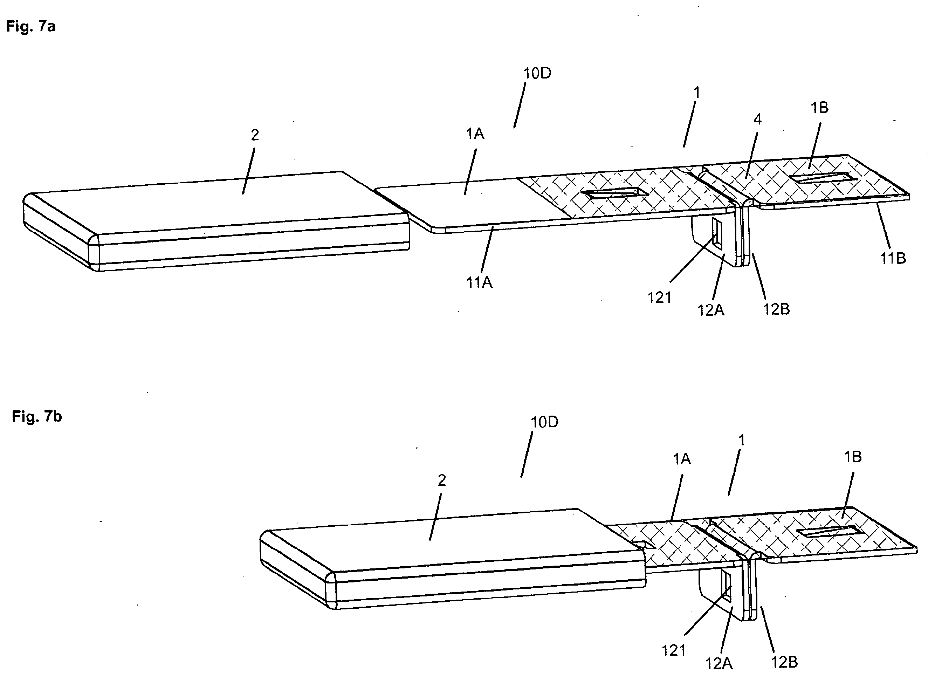

Figur 7a zeigt eine weitere vorzugsweise ausgestaltete Trennvorrichtung 10D mit einer Ankervorrichtung 1, die ein erstes Ankerteil 1A gemäss Figur 2a und ein anhand einer Klebstofffolie 4 damit verbundenes zweites Ankerteil 1B aufweist. Die Kopfplatte 11B des zweiten Ankerteils 1B wurde verkürzt, so dass die Gesamtlänge der beiden axial zueinander ausgerichteten Kopfplatten 11A, 11B der Ankervorrichtung 1 weniger Raum in Anspruch nehmen und die Fussplatte 12B auch im Bereich einer Seitenwand 91 eingesetzt werden kann.

Die Fussplatten 12A, 12B liegen parallel zueinander ausgerichtet aneinander und können in dieser Position direkt in eine der Längslochungen 921 eingeführt werden.

Die beiden Ankerteile 1A, 1B werden exemplarisch durch eine Klebstofffolie 4, welche die beiden Kopfplatten 11A, 11B überdeckt, sowie Kopplungselemente 121 zusammengehalten, die an den Fussplatten 12A, 12B vorgesehen sind. Beispielsweise sind Kopplungselemente 121, wie Haken, Zungen oder Öffnungen, aus den Fussplatten 12A, 12B ausgeschnitten. Nebst den alternativ anwendbaren Verbindungsvarianten sind auch weitere Verbindungsmittel, wie Ringe oder Klemmen einsetzbar.

Figur 7b zeigt die Trennvorrichtung 10D von Figur 7a mit der teilweise auf das erste Ankerteil 1A aufgesetzten Abdeckung 2.

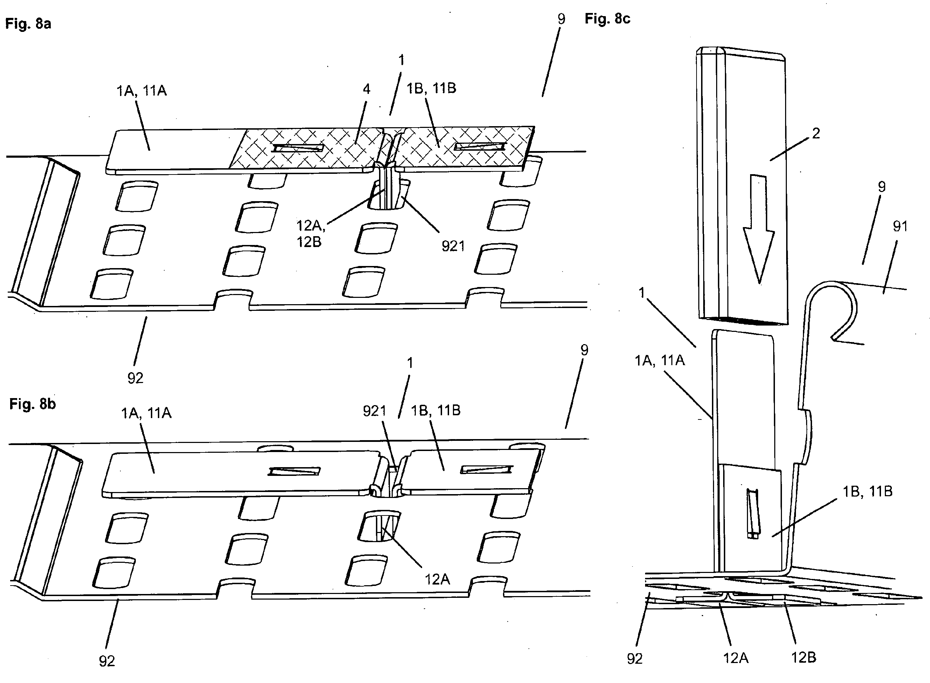

Figur 8a zeigt die Ankervorrichtung 1 von Figur 7a beim Einführen der Fussplatten 12A, 12B in eine Längslochung 921.

Figur 8b zeigt die Ankervorrichtung 1 von Figur 8a mit den Kopfplatten 11A, 11B an der Bodenplatte 92 der Kabelbahn 9 anliegend.

Figur 8c zeigt die Ankervorrichtung 1 von Figur 8a mit den aneinander anliegenden Kopfplatten 11A, 11B und der Abdeckung 2, die nach unten auf die Ankervorrichtung 1 aufgesetzt wird, die nahe der Seitenwand 91 der Kabelbahn 9 montiert ist. Durch das Verkürzen der Kopfplatte 11B des zweiten Ankerteils 1B war es möglich, dieses nahe an die Seitenwand 91 zu bringen und die Fussplatte 12B in die Längslochung 921 einzuführen. Die asymmetrische Ausgestaltung der Ankervorrichtung 1 erlaubt es somit, dieselbe nahe an einer Seitenwand 91 zu installieren.

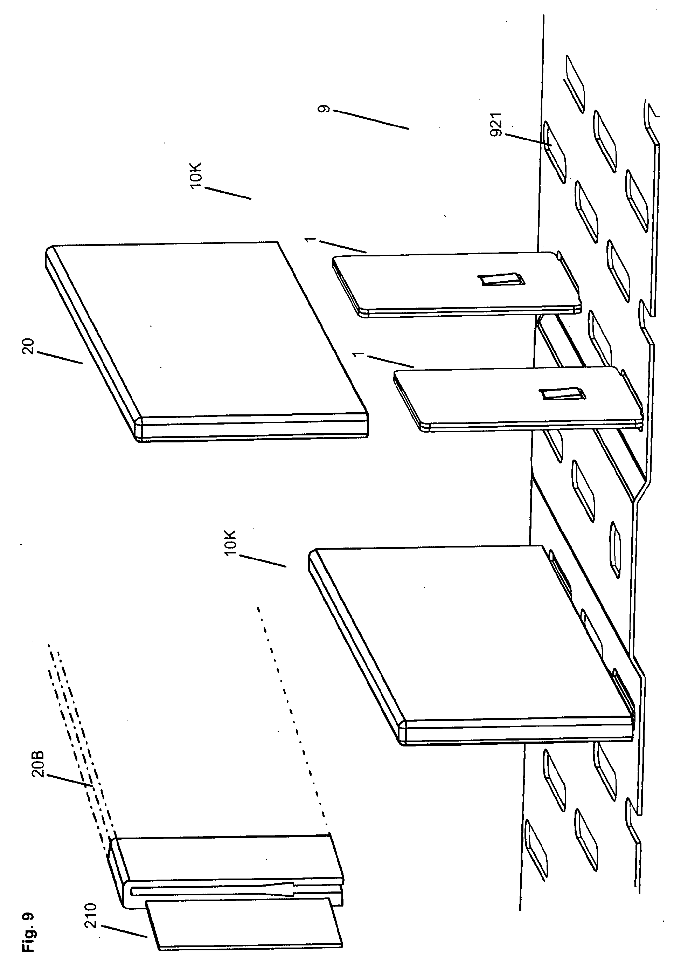

Figur 9 zeigt zwei Trennvorrichtungen 10K, die zwei Ankervorrichtungen 1 und eine gemeinsame Abdeckung 20 oder 20B aufweisen (siehe Figur 10b) . Die gemeinsame Abdeckung 20, 20B kann entweder von einem Band abgeschnitten werden oder kann eine fixe Länge aufweisen und frontseitig und rückseitig geschlossen sein. Durch die Verwendung von zwei oder mehreren Ankervorrichtungen 1 kann die Trennvorrichtung 10K stabilisiert werden. Zudem kann das Kabel in der Kabelbahn 9 über eine längere Distanz geführt werden.

Figur 10 zeigt ein Winkelstück 90 einer. Kabelbahn 9, in die drei Ankervorrichtungen 1 eingesetzt wurden, die parallel zur Längsachse des Kabelbahnsegments ausgerichtet sind, in dem sie verankert sind. Die Ankervorrichtungen 1 sind je durch eine gesonderte Abdeckung 2 gemäss Figur 4 oder gesamthaft durch eine gemeinsame bandförmige Abdeckung 20B abdeckbar. In beiden Fällen kann das Kabel entlang einer Kurvenbahn geführt werden, ohne dass Kanten der Seitenwände 91 in diesem Bereich kontaktiert werden. Besonders vorteilhaft kann die innen liegende Seitenwand 91 des Winkelstücks 90 abgedeckt werden, gegen die Kabel gezogen wird, sofern eine Zugkraft auf diese einwirkt.

Figur 10b zeigt das Winkelstück 90 mit den drei Ankervorrichtungen 1 von Figur 10b, die durch eine gemeinsame bandförmige Abdeckung 20B abgedeckt sind. Diese Ausgestaltung der Trennvorrichtung 10K zeigt, dass Kabel damit nicht nur voneinander, sondern auch von den Seitenwänden 91 der Kabelbahn 9 oder von sogenannten Formstücken, wie Bögen oder Verzweigungsstellen, vorteilhaft getrennt werden können.

Figur 11 zeigt das Kabelbahnsegment von Figur 3 mit einer Ankervorrichtung 1R die drehbar in einer Längslochung 921 gehalten ist. Die Ankervorrichtung 1R weist dazu Ankerteile 1A auf, wie sie in Figur 11a gezeigt sind und in Verbindung mit Figur 2a bereits geschrieben wurden. Das in Figur 11a gezeigte Ankerteil 1A weist einen Steg 13 auf, welcher die Kopfplatte 11 mit der Fussplatte 12 verbindet. Die Breite B13 des Stegs 13 wurde durch beidseitige Einschnitte 131 gekürzt, so dass dieser innerhalb der Längslochung 921 drehbar ist, wie dies Figur 11 zeigt. Bei der Drehung der Ankervorrichtung 1R wird die Bodenplatte 92 der Kabelbahn 9 in die Einschnitte 131 zwischen die Kopfplatte 11A, 11B und die Fussplatten 12A, 12B eingeführt. Das Ankerteil 1R kann daher entsprechend der Länge des Stegs 13 vorzugsweise um maximal 45° gedreht werden und wird in jeder Drehlage stabil gehalten. Drehbare Ankerteile 1R werden vorzugsweise in Übergangsbereichen vorgesehen, in denen Änderungen der Teilquerschnitte vorgenommen werden, innerhalb denen die voneinander getrennten Kabel geführt werden.

Figur 11 zeigt, dass die Trennlinie bzw. die auf die Ankervorrichtungen 1 aufgesetzte bandförmige Abdeckung 20B S-förmig verläuft. Der Verlauf ist exemplarisch gezeigt und kann vom Anwender beliebig geändert werden. Ferner kann der Querschnitt der Abdeckungen 2, 20, 20B beliebig an die Bedürfnisse des Anwenders angepasst werden. Beispielsweise kann vorgesehen werden, dass sich die Abdeckungen 2, 20, 20B nach oben erweitern, so dass das Kabel in jedem Teilquerschnitt der Kabelbahn 9 sicher gehalten bleibt.

Die Abdeckungen sind vorzugsweise aus einem elastischen Kunststoff gefertigt, der eine hohe Abriebfestigkeit, eine hohe Verschleissfestigkeit, eine hohe Wechselbiegefestigkeit und eine Kälteflexibilität in einem weiten Temperaturbereich aufweist. Vorzugsweise weist der Kunststoff zudem eine gute Gleitfähigkeit auf, so dass in der Kabelbahn installiertes Kabel leicht entlang der Trennvorrichtung 10 gleiten kann. Besonders geeignet sind Kunststoffe aus Polyamid oder Polyurethan, wie sie in der Kabelindustrie als Mantelmaterial verwendet werden.

Besonders vorteilhaft sind Hybridabdeckungen einsetzbar, die aus Kunststoff bestehen und wenigstens ein Verstärkungselement, wie ein Metallband aufweisen, welches der beispielsweise entlang einer Kurve verlaufenden Abdeckung 20, 20B eine hohe Formstabilität verleiht.

Abdeckungen 20; 20B der genannten Art sind besonders vorteilhaft mit erfindungsgemässen Ankervorrichtungen einsetzbar. Hingegen werden jedoch auch wesentliche Vorteile gegenüber bekannten Trennvorrichtungen 10 erzielt, wenn die bandförmigen Abdeckungen 20; 20B in Verbindung mit anders ausgestalteten Ankervorrichtungen eingesetzt werden, die beispielsweise verschraubt werden. Auch mit diesen Trennvorrichtungen, die eine bandförmige Abdeckung mit wenigstens zwei Ankervorrichtungen umfassen, lässt sich eine Kabelbahn vorteilhaft strukturieren.

## Patentansprüche

1. Trennvorrichtung (10), insbesondere Ordnungstrennvorrichtung, für eine Kabelbahn (9), die eine mit Längslochungen (921) versehene Bodenplatte (92) aufweist, mit einer Ankervorrichtung (1), die in eine der Längslochungen (921) der Bodenplatte (92) einsetzbar ist, und dass die Ankervorrichtung (1) zwei zumindest annähernd L-förmige Ankerteile (1A, 1B) umfasst, die je eine in eine der Längslochungen (921) einführbare Fussplatte (12A, 12B) und eine nicht in die Längslochungen (921) einführbare Kopfplatte (11A; 11B) aufweisen, **dadurch gekennzeichnet dass** eine mit einer Schlitzöffnung (25) versehene Abdeckung (2) vorgesehen ist, die der Aufnahme und dem Halten der beiden aneinander liegenden Kopfplatten (11A; 11B) dient.

2. Trennvorrichtung (10) nach Anspruch 1, **dadurch gekennzeichnet, dass** jede der Kopfplatten (11A, 11B) wenigstens ein Stützelement (111) vorzugsweise beidseits je eine an die Fussplatte (12A, 12B) anschliessende und diese überragende Schulter (111) aufweist, dass die Breite B11 der Kopfplatten (11A, 11B) vorzugsweise grösser als die Länge L9 der Längslochungen (921) ist, und dass die Breite B12 der Fussplatten (12A, 12B) stets kleiner als die Länge L9 der Längslochungen (921) ist.

3. Trennvorrichtung (10) nach Anspruch 1 oder 2, **dadurch gekennzeichnet, dass** vorzugsweise jede der Kopfplatten (11A, 11B) ein Arretierelement (112) aufweist, welches innerhalb der Schlitzöffnung (25) in der Abdeckung (2) einrastbar oder verankerbar ist und/oder dass Abdeckung (2) innerhalb der Schlitzöffnung (25) eine Einformung (22) aufweist, die der formschlüssigen Aufnahme oder dem kraftschlüssigen Halten des Arretierelements (112) dient.

4. Trennvorrichtung (10) nach Anspruch 3, **dadurch gekennzeichnet, dass** die Ankerteile (1A, 1B) aus Metall oder Kunststoff gefertigt sind und vorzugsweise federelastisch sind.

5. Trennvorrichtung (10) nach einem der Ansprüche 1 - 4, **dadurch gekennzeichnet, dass** vorzugsweise jede der Kopfplatten (11A, 11B) um einen Winkel (w) gegenüber der zugehörigen Fussplatte (12A, 12B) geneigt ist, der in einem Bereich von 75° bis 90°, vorzugsweise in einem Bereich von 80° bis 85° liegt.

6. Trennvorrichtung (10) nach einem der Ansprüche 1-5, **dadurch gekennzeichnet, dass** an den Kopfplatten (11A, 11B) zueinander korrespondierende Kopplungselemente (113, 114) vorgesehen, vorzugsweise daraus ausgeschnitten sind und/oder dass an den Fussplatten (12A, 12B) zueinander korrespondierende Kopplungselemente (121) vorgesehen, vorzugsweise daraus ausgeschnitten sind.

7. Trennvorrichtung (10) nach einem der Ansprüche 1-6, **dadurch gekennzeichnet, dass** die Fussplatten (12A, 12B) und die Kopfplatten (11A, 11B) je durch einen Verbindungssteg (13) miteinander verbunden sind, dessen Breite B13 der Breite B12 der Fussplatten (12A, 12B) oder einem Teil davon entspricht, so dass die Steg (13) innerhalb einer der Längslochungen (921) in einen Winkelbereich von vorzugsweise 10° bis 45° drehbar ist.

8. Trennvorrichtung (10) nach einem der Ansprüche 1-7, **dadurch gekennzeichnet, dass** die beiden Ankerteile (1A, 1B) durch ein Verbindungselement (4) vorzugsweise eine Klebstofffolie, derart miteinander verbunden sind, dass die beiden Fussplatten (12A, 12B) aneinander liegen, und in eine der Längslochungen (921) eingeführt werden können.

9. Trennvorrichtung (10) nach einem der Ansprüche 1-8, **dadurch gekennzeichnet, dass** die erste Kopfplatte (11A) kürzer ausgebildet ist als die zweite Kopfplatte (11B) und/oder die erste Fussplatte (12A) kürzer ausgebildet ist als die zweite Fussplatte (12B).

10. Trennvorrichtung (10) nach einem der Ansprüche 1-9, **dadurch gekennzeichnet, dass** zwei oder mehrere Ankervorrichtungen (1) in unterschiedlichen Öffnungen (921) der Kabelbahn (9, 90) positionierbar sind, auf die eine gemeinsame Abdeckung (20, 20B) aufgesetzt ist, die gegebenenfalls von einem Band abgeschnitten ist und die gerade oder entlang einer Kurve verläuft.

11. Trennvorrichtung (10) nach Anspruch 10, **dadurch gekennzeichnet, dass** die gegebenenfalls von einem Band abgeschnittene Abdeckung (20, 20B) frontseitig und rückseitig geöffnet oder geschlossen ist.

12. Trennvorrichtung (10) nach einem der Ansprüche 1-11, **dadurch gekennzeichnet, dass** die Abdeckung (2, 20, 20B) aus einem elastischen Kunststoff, wie Polyurethan (PUR), gefertigt ist und/oder dass die Abdeckung (2, 20, 20B) wenigstens ein Verstärkungselemente, wie ein Metallband (210) aufweist.

13. Kabelbahn (9; 90), die eine mit Längslochungen (921) versehene Bodenplatte (92) aufweist, in die wenigstens eine Trennvorrichtung (10) nach einem der Ansprüche 1-12 eingesetzt ist, die eine oder mehrere Ankervorrichtungen (1) aufweist, auf die eine Abdeckung (2; 20) aufgesetzt ist, die gerade oder gekrümmt verläuft.

14. Kabelbahn (9; 90) nach Anspruch 13, **dadurch gekennzeichnet, dass** die Ankervorrichtung (1) zwei zumindest annähernd L-förmige Ankerteile (1A, 1B) umfasst, die je eine Kopfplatte (11A; 11B) mit einer Breite B11 aufweisen, die grösser ist als die Länge L9 der Längslochungen (921), und die je eine Fussplatte (12A, 12B) mit einer Breite B12 aufweisen, die kleiner ist als die Länge L9 der Längslochungen (921) und dass die Kopfplatte (11A; 11B) und die Fussplatte (12A, 12B) durch einen Steg miteinander verbunden sind, dessen Breite B13 der Breite B12 der Fussplatten (12A, 12B) oder einem Teil davon entspricht, so dass die Steg (13) innerhalb einer der Längslochungen (921) in einen Winkelbereich von vorzugsweise 10° bis 45° drehbar ist.

15. Kabelbahn (9; 90) nach Anspruch 13 oder 14, **dadurch gekennzeichnet, dass** wenigstens eine Trennvorrichtung (10) mit nur einer Ankervorrichtung (1) vorgesehen ist oder dass wenigstens eine Trennvorrichtung (10) vorgesehen ist, die mehrere Ankervorrichtungen (1) aufweist, welche von einer Abdeckung (20) gehalten und miteinander verbunden sind, die gerade verläuft, die entlang einer Kurve einen Kabelschutz bildet oder die in einer Kurve verläuft und die Kabelbahn (9; 90) abschnittweise unterschiedlich unterteilt.

## Claims

1. Separation device (10), particularly separation device for order purposes, for a cable tray (9), which comprises a base plate (92) that is provided with longitudinal slots (921), with an anchoring device (1) that is insertable into one of the longitudinal slots (921) of the base plate (92), and that the anchoring device (1) comprises two at least approximately L-shaped anchor members (1A, 1B), which comprise a foot plate (12A, 12B) that can be inserted into one of the longitudinal slots (921) and a head plate (11A; 11B) that cannot be inserted into the longitudinal slots (921), **characterised in, that** a cover (2) is provided which comprises a slot opening (25) that serves for receiving and holding the two head plates (11A; 11B), which lie against one another.

2. Separation device (10) according to claim 1, **characterised in, that** each of the head plates (11A, 11B) comprises at least one support element (111), preferably on both sides each a shoulder (111) that is adjoining and overlapping the foot plate (12A, 12B), that the width B11 of the head plates (11A, 11B) is larger than the length L9 of the longitudinal slots (921), and that the width B12 of the foot plates (12A, 12B) is always smaller than the length L9 of the longitudinal slots (921).

3. Separation device (10) according to claim 1 or 2, **characterised in, that** preferably each of the head plates (11A, 11B) comprises a lock element (112), which can be arrested or anchored inside the slot opening (25) of the cover (2) and/or that the cover (2) comprises an indentation (22) inside the slot opening (25), which serves for form-locking receiving or force locking holding of the lock element (112).

4. Separation device (10) according to claim 3, **characterised in, that** the anchor members (1A, 1B) are made from metal or plastic and are preferably spring elastic.

5. Separation device (10) according to one of the claims 1 - 4, **characterised in, that** preferably each of the head plates (11A, 11B) is inclined by an angle (w) against the related foot plate (12A, 12B), which lies in the range of 75° to 90°, preferably in a range of 80° to 85°.

6. Separation device (10) according to one of the claims 1-5, **characterised in, that** coupling elements (113, 114), which correspond to one another, are provided at the head plates (11A, 11B), preferably cut out thereof, and/or that coupling elements (121), which correspond to one another, are provided at the foot plates (12A, 12B), preferably cut out thereof.

7. Separation device (10) according to one of the claims 1-6, **characterised in, that** the foot plates (12A, 12B) and the head plates (11A, 11B) each are connected with one another via a connecting bridge (13), whose width B13 corresponds to the width B12 of the foot plates (12A, 12B) or a part thereof, so that the connecting bridge (13) is turnable within one of the longitudinal slots (921) within a range of an angle of preferably 10° to 45°.

8. Separation device (10) according to one of the claims 1-7, **characterised in, that** the two anchor members (1A, 1B) are connected by a connecting element (4) preferably a film adhesive such that the two foot plates (12A, 12B) abut one another and can be introduced into one of the longitudinal slots (921).

9. Separation device (10) according to one of the claims 1-8, **characterised in, that** the first head plate (11A) is formed shorter than the second head plate (11B) and/or the first foot plate (12A) is formed shorter than the second foot plate (12B).

10. Separation device (10) according to one of the claims 1-9, **characterised in, that** two or a plurality of anchoring devices (1), on which a common cover (20, 20B) is seated, which optionally is cut from a ribbon and extends straight or along a curve, are positionable in different openings (921) of the cable tray (9, 90).

11. Separation device (10) according to claim 10, **characterised in, that** the cover (20, 20B), which optionally is cut from a ribbon, is open or closed at the front side and the backside.

12. Separation device (10) according to one of the claims 1-11, **characterised in, that** the cover (2, 20, 20B) is made of an elastic plastic, such as Polyurethane (PUR), and/or that the cover (2, 20, 20B) comprises at least one reinforcing element, such as a metal ribbon (210).

13. Cable tray (9; 90), which comprises a base plate (92) with longitudinal slots (921), into which at least one separation device (10) according to one of the claims 1-12 is inserted that comprises one or a plurality of anchoring devices (1), onto which a cover (2; 20) is seated, which extends straight or bent.

14. Cable tray (9; 90) according to claim 13, **characterised in, that** the anchoring device (1) comprises two at least approximately L-shaped anchor members (1A, 1B) that comprise each a head plate (11A; 11B) with a width B11 that is larger than the length L9 of the longitudinal slots (921), and that comprise each a foot plate (12A, 12B) with a width B12, that is smaller than the length L9 of the longitudinal slots (921) and that the head plate (11A; 11B) and the foot plate (12A, 12B) are connected with one another via a bridge, whose width B13 corresponds to the width B12 of the foot plates (12A, 12B) or a part thereof, so that the bridge (13) is turnable within one of the longitudinal slots (921) within a range of an angle of preferably 10° to 45°.

15. Cable tray (9; 90) according to claim 13 or 14, **characterised in, that** at least one separation device (10) with only one anchoring device (1) is provided or that at least one separation device (10) is provided that comprises a plurality of anchoring devices (1), which are held and connected with one another by a cover (20), which extends straight, which forms a cable protection along a curve or which extends along a curve and separates the cable tray (9; 90) section-wise differently.

## Revendications

1. Dispositif de séparation (10), en particulier un dispositif de séparation pour ordonner, pour un chemin de câble (9), comprenant une plaque de base (92) avec des trous longitudinaux (921), avec un dispositif d'ancrage (1), qui peut être inséré dans un des trous longitudinaux (921) de la plaque de base (92), et que le dispositif d'ancrage (1) comprend deux pièces d'ancrage (1A; 1B) ayant au moins à peu près la forme de 'L', qui présentent chacune une plaque de pied (12A; 12B) pouvant être insérée dans un trou longitudinal (921) et une plaque de tête (11A; 11B) ne pouvant pas être insérée dans les trous longitudinaux (921), **caractérisé en ce qu**'un couvercle (2) avec une fente (25) est prévu, qui sert à recevoir et tenir les deux plaques de tête (11A; 11B), qui sont directement posées l'une sur l'autre.

2. Dispositif de séparation (10) selon la revendication 1, **caractérisé en ce que** chacune des plaques de tête (11A, 11B) présent au moins un élément de support (111) de préférence des deux côtés un épaulement (111) dépassant et se joignant à la plaque de pied (12A, 12B), que la largeur B11 des plaques de tête (11A, 11B) est de préférence plus grand que la longueur L9 des trous longitudinaux (921), et que la largeur B12 de la plaque de pied (12A, 12B) est toujours plus petit que la longueur L9 des trous longitudinaux (921).

3. Dispositif de séparation (10) selon la revendication 1 ou 2, **caractérisé en ce que** de préférence chacune des plaques de tête (11A, 11B) présente un élément de blocage (112), qui peut être encliqueté ou verrouillé dans la fente (25) dans le couvercle (2) et/ou que le couvercle (2) présente à l'intérieur de la fente (25) une indentation (22), qui sert à recevoir par ajustement de forme ou à tenir par adhésion l'élément de blocage (112).

4. Dispositif de séparation (10) selon la revendication 3, **caractérisé en ce que** les pièces d'ancrage (1A, 1B) sont fait en métal ou en plastique et sont de préférence élastique comme un ressort.

5. Dispositif de séparation (10) selon une des revendications 1 - 4, **caractérisé en ce que** de préférence chacune des plaque de tête (11A, 11B) est inclinée par un angle (w) par rapport à la plaque de pied (12A, 12B) correspondant, ledit angle (w) étant dans l'intervalle de 75° à 90°, de préférence dans l'intervalle de 80° à 85°.

6. Dispositif de séparation (10) selon une des revendications 1-5, **caractérisé en ce que** les plaques de tête (11A, 11B) présentent des éléments d'accouplement (113, 114) mutuellement correspondant, de préférence en découpés et/ou que les plaques de pied (12A, 12B) présentent des éléments d'accouplement (121) mutuellement correspondant, de préférence en découpés.

7. Dispositif de séparation (10) selon une des revendications 1-6, **caractérisé en ce que** les plaques de pied (12A, 12B) et les plaques de tête (11A, 11B) sont reliés chacun par une tige de liaison (13), dont la largueur B13 correspond à la largueur B12 de la plaque de pied (12A, 12B) ou d'une partie de la plaque de pied (12A, 12B), de manière à ce que la tige de liaison (13) peut tourner dans un des trous longitudinaux (921) par un angle dans l'intervalle de préférence entre 10° et 45°.

8. Dispositif de séparation (10) selon une des revendications 1-7, **caractérisé en ce que** les deux pièces d'ancrage (1A, 1B) sont reliés par un élément de liaison (4) de préférence un film collant, de manière à ce que les deux plaques de pied (12A, 12B) s'appuient l'une contre l'autre et peuvent être insérés dans un des trous longitudinaux (921).

9. Dispositif de séparation (10) selon une des revendications 1-8, **caractérisé en ce que** la première plaque de tête (11A) est plus courte que la deuxième plaque de tête (11B) et/ou la première plaque de pied (12A) est plus courte que la deuxième plaque de pied (12B).

10. Dispositif de séparation (10) selon une des revendications 1-9, **caractérisé en ce que** deux ou plusieurs dispositifs d'ancrage (1) peuvent être positionnés dans des trous (921) différents du chemin de câble (9, 90), sur lesdits dispositifs d'ancrage étant posé un couvercle commun (20, 20B), qui est éventuellement découpé d'un ruban et qui suit une trajectoire droite ou courbée.

11. Dispositif de séparation (10) selon la revendication 10, **caractérisé en ce que** le couvercle (20, 20B) étant éventuellement découpé d'un ruban est ouvert ou fermé à l'arrière et devant.

12. Dispositif de séparation (10) selon une des revendications 1-11, **caractérisé en ce que** le couvercle (2, 20, 20B) est formé d'un plastique élastique, comme du polyuréthane (PUR), et/ou que le couvercle (2, 20, 20B) présente au moins un élément de renforcement, comme un ruban métallique (210).

13. Chemin de câble (9; 90), qui présente une plaque de base (92) avec des trous longitudinaux (921), dans lesquels est introduit au moins un dispositif de séparation (10) selon une des revendications 1-12, qui présente un ou plusieurs dispositifs d'ancrage (1), sur lesquels un couvercle (2; 20) est posé, qui est droit ou courbé.

14. Chemin de câble (9; 90) selon la revendication 13, **caractérisé en ce que** le dispositif d'ancrage (1) comprend pièces d'ancrage (1A; 1B) ayant au moins à peu près la forme de 'L' , qui présentent chacun une plaque de tête (11A; 11B) d'une largueur B11 plus grand que la longueur L9 des trous longitudinaux (921), et qui présentent chacun une plaque de pied (12A, 12B) d'une largueur B12 plus petit que la longueur L9 des trous longitudinaux (921) et que la plaque de tête (11A; 11B) et la plaque de pied (12A, 12B) sont reliés par une tige de liaison (13), dont la largueur B13 correspond à la largueur B12 des plaques de pied (12A, 12B) ou d'une parties des plaques de pied (12A, 12B), de manière à ce que la tige de liaison (13) peut tourner dans un des trous longitudinaux (921) par un angle dans l'intervalle de préférence entre 10° et 45°..

15. Chemin de câble (9; 90) selon la revendication 13 ou 14, **caractérisé en ce que** au moins un dispositif de séparation (10) présentant seulement un dispositif d'encrage (1) est prévu ou que au moins un dispositif de séparation (10) présentant plusieurs dispositifs d'encrage (1) est prévu qui sont tenus et reliés par un couvercle (20), qui s'étend de manière droite, qui forme une protection de câble long d'une courbe ou qui s'étend le long d'une courbe et sépare le chemin de câble (9; 90) différemment par sections.
